# FASCICULE DE BREVET EUROPEEN

(11) **EP 0 336 832 B1**
(45) Date de publication et mention de la délivrance du brevet: **08.12.1993**
(21) Numéro de dépôt: 89400918.2
(22) Date de dépôt: 04.04.1989
(51) Int. Cl.: G06F 15/336, H04B 1/66, H04L 23/02

(54) **Corrélateur numérique asynchrone et démodulateurs comportant un tel corrélateur**
Asynchroner digitaler Korrelator und diesen Korrelator enthaltende Demodulatoren
Asynchronous digital correlator and demodulators comprising such a correlator

(30) Priorité: 08.04.1988 FR 8804682
(43) Date de publication de la demande: 11.10.1989
(73) Titulaire: LMT RADIO PROFESSIONNELLE, 92103 Boulogne-Billancourt (FR)
(72) Inventeur: Albrieux, Vincent, F-92045 Paris la Defense (FR); Soufflet, Didier, F-92045 Paris la Defense (FR)
(74) Mandataire: Lincot, Georges

(56) Documents cités:
- US-A- 4 730 340
- PROCEEDINGS OF MELECON '87 MEDITERRANEAN ELECTROTECHNICAL CONFERENCE, 34TH CONGRESS ON ELECTRONICS, JOINT CONFERENCE, 1987, pages 157-161, IEEE, New York, US; M.K. SUST et al.: "All digital signal processing in a spread spectrum communication system"
- IEEE TRANSACTIONS ON COMMUNICATIONS, vol. COM-32, no. 2, février 1984, pages 199-201, IEEE, New York, US; J. DAS: "Technique for improving the efficiency of M-ary signaling"
- IEEE 1983 ISCAS, Newport, 2-4 mai 1983, pages 522-525, IEEE, New York, US; A. CORRY et al.: "Architecture of a CMOS correlator"

## Description

L'invention concerne un corrélateur numérique asynchrone et des démodulateurs comportant un tel corrélateur.

Ce corrélateur permet de traiter un signal complexe constitué d'une première et d'une seconde porteuse, I et Q, modulées par une fonction pseudo-aléatoire pour étaler le spectre, et modulées par un code M-aire orthogonal. Un tel signal complexe résulte, par exemple, d'une modulation de type PSK, ou MSK, ou QPSK, avec étalement de spectre et modulation par des codes de Walsh. La démodulation d'un tel signal nécessite de comprimer son spectre au moyen d'une fonction pseudo-aléatoire identique à celle ayant été utilisée pour étaler ce spectre, puis consiste à reconnaître une donnée transmise, en identifiant le code modulant parmi les M codes possibles. Ces deux opérateurs peuvent être réalisées au moyen d'un corrélateur. Un corrélateur pour signaux BPSK est connu du document Proceedings of Melecon '87 Mediter- ranean Electrotechnical Conference, 34th Congress on Electronics, Joint Conference, 1987 pages 157-161 - IEEE New York, US, M.K. Sust et al intitulé : "All digital signal processing in a spread spectrum communication system".

Mais pour corréler des modulations plus complexes, il n'existe pas actuellement de corrélateur permettant de corréler un signal complexe avec un signal de référence, sur une longueur élevée, telle que 256 moments, tout en ayant une structure suffisamment simple pour permettre de réaliser un démodulateur intégrable en un seul circuit intégré. Les corrélateurs de types connus sont conçus pour la reconnaissance de trames plutôt que pour la démodulation. Un premier type de dispositif corrélateur connu, qui est disponible commercialement sous la forme d'un circuit intégré, ne travaille que sur 64 moments. Un second type connu de corrélateur, disponible commercialement sous la forme de circuit intégré, travaille sur 256 moments et ne comporte pas de sorties intermédiaires fournissant des valeurs de corrélation partielles portant sur un plus petit nombre de moments.

Les démodulateurs connus comportent un nombre élevé de corrélateurs à 64 moments ou à 256 moments. En effet, lis comportent une chaîne de quatre corrélateurs à 64 moments, ou un corrélateur à 256 moments, pour la porteuse 1 ; et une chaîne de quatre corrélateurs à 64 moments, ou un corrélateur à 256 moments, pour la porteuse Q, pour chacun des codes M-aires. Le nombre M pouvant être égal à 16, le nombre de circuits intégrés corrélateurs peut donc atteindre 128.

Le but de l'invention revendiquée est donc de proposer un corrélateur numérique asynchrone permettant de réaliser notamment des démodulateurs plus simples et pouvant éventuellement être intégrés dans un petit nombre de circuits intégrés, voire même dans un circuit intégré unique. L'objet de l'invention est un corrélateur ayant une structure systolique dans laquelle les calculs pour la porteuse I et pour la porteuse Q sont multiplexés temporellement, et qui est divisée de telle façon qu'elle fournit des valeurs du module d'une fonction de corrélation partielle calculées sur des longueurs beaucoup plus petite que la longueur totale de corrélation, pour permettre une reconnaissance des codes au moyen d'un circuit arithmétique relativement simple calculant des combinaisons linéaires de ces modules.

Selon l'invention, un corrélateur numérique asynchrone pour corréler un signal binaire de référence avec un signal complexe constitué d'une première et d'une seconde porteuse modulées par une fonction pseudo-aléatoire et par un codage M-aire orthogonal de Walsh, ces deux porteuses étant échantillonnées et numérisées, caractérisé en ce qu'il comporte :
- un multiplexeur pour transmettre alternativement une valeur de la première porteuse et une valeur de la seconde porteuse, avec une période égale à la moitié de leur période d'échantillonnage ;
- un premier filtre numérique adapté à la fonction pseudo-aléatoire, comportant une chaîne de registres pour stocker L bits consécutifs du signal de référence et une chaîne de M macro-cellules de corrélation recevant la suite des valeurs multiplexées de la première et de la seconde porteuse (I, Q), chaque macro-cellule calculant la valeur d'une première fonction, dite de corrélation partielle, entre N bits du signal de référence et N valeurs de la première porteuse, puis calculant la valeur d'une seconde fonction, dite de corrélation partielle, entre N bits du signal de référence et N valeurs de la seconde porteuse, N étant égal à L/M ;
- un second filtre numérique comportant des moyens de calcul pour déterminer la valeur combinaisons linéaires des valeurs des premières fonctions de corrélation partielle , puis de combinaisons linéaires des valeurs des secondes fonctions de corrélation partielle, adaptés aux codes de Walsh, les coefficients des combinaisons linéaires étant inchangés et étant égaux à ±1 ; et comportant des moyens pour démultiplexer les valeurs des combinaisons linéaires, et déterminer le module d'un vecteur ayant pour composantes les valeurs de ces deux combinaisons linéaires.

L'invention sera mieux comprise et d'autres détails apparaîtront à l'aide de la description ci-dessous et des figures l'accompagnant :
- la figure 1 représente le schéma synoptique d'un exemple de réalisation d'un démodulateur selon l'art antérieur ;
- la figure 2 représente le schéma synoptique d'un exemple de réalisation d'un premier type de démodulateur comportant un corrélateur selon l'invention ;
- la figure 3 représente le schéma synoptique plus détaillé d'une macro-cellule de corrélation constituant cet exemple de réalisation ;
- les figures 4 et 5 représentent des schémas partiels de cette macro-cellule ;
- la figure 6 représente le schéma synoptique d'un dispositif de calcul appartenant à cet exemple de réalisation ;
- la figure 7 représente le schéma synoptique d'un exemple de réalisation d'un second type de démodulateur comportant un corrélateur selon l'invention ;
- la figure 8 représente le schéma synoptique d'un dispositif de calcul appartenant à cet exemple de réalisation.

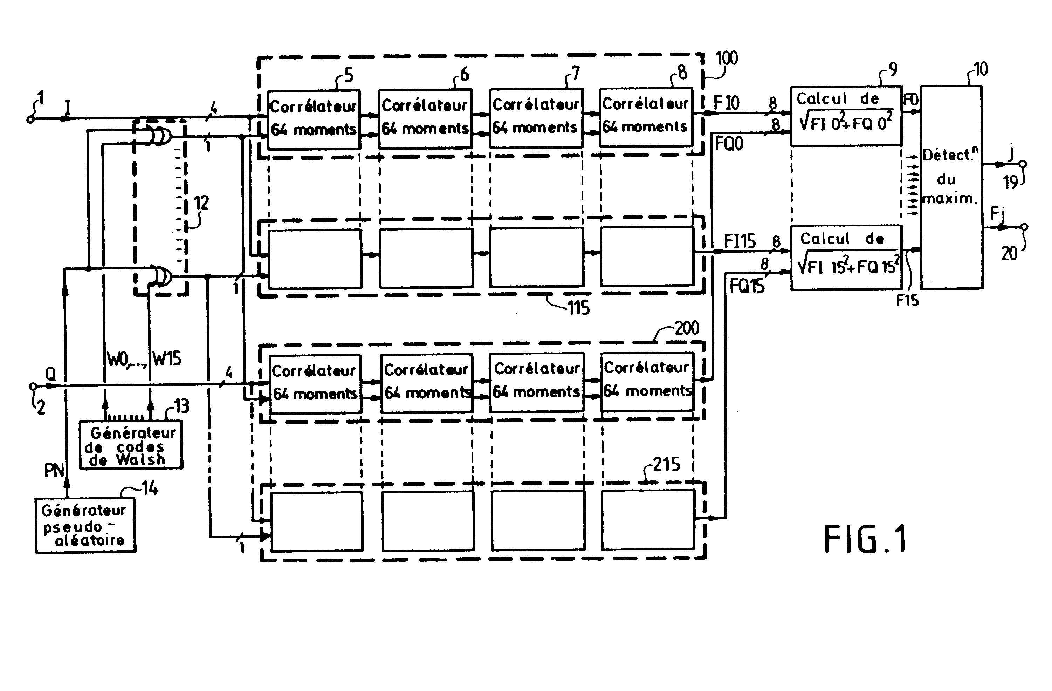

Le démodulateur représenté sur la figure 1, et qui appartient à l'art antérieur, comporte :
- deux bornes d'entrée, 1 et 2, recevant respectivement les valeurs numériques de deux porteuses, I et Q, modulées par une fonction pseudo-aléatoire et par un code M-aire orthogonal, et qui sont échantillonnées et numérisées ;
- un générateur de codes de Walsh, 13, ayant 16 sorties fournissant respectivement 16 signaux binaires correspondant à 16 codes de Walsh, et notés W0, ..., W15 ;
- un générateur 14 fournissant un signal binaire pseudo-aléatoire, PN, identique à celui ayant été utilisé pour étaler le spectre des deux ondes porteuses I et Q ;
- 16 chaînes de corrélateurs, 100 à 115, pour corréler la porteuse I avec les 16 signaux de référence, chaque chaîne telle que la chaîne 100, comportant quatre corrélateurs, 5 à 8, chacun travaillant sur 64 moments et étant constitué d'un circuit intégré ;
- 16 chaînes de corrélateurs, 200 à 215, pour corréler la porteuse Q avec les 16 signaux de référence, chaque chaîne étant identique à la chaîne 100 ;
- un ensemble 9 de seize dispositifs de calcul du module d'un vecteur à deux composantes
- un dispositif 10 de détection du maximum parmi 16 valeurs.

Il est possible aussi de constituer chacune des chaînes 100 à 115 et 200 à 215 au moyen d'un circuit intégré corrélateur unique travaillant sur 256 moments.

Les chaînes de corrélateurs, 100 à 115, fournissent respectivement des valeurs numériques F10 à FI15 qui sont les valeurs des fonctions de corrélation de la porteuse 1 respectivement avec les seize signaux de référence, sur 256 moments. Les sorties des chaînes de corrélateurs, 200 à 215, fournissent respectivement des valeurs FQO à FQ15 qui sont les valeurs des fonctions de corrélation de la porteuse Q respectivement avec les seize signaux de référence, sur 256 moments. Chacun des dispositifs de calcul de l'ensemble 9 calcule le module d'un vecteur ayant pour composantes une valeur de la fonction de corrélation de la porteuse I avec un signal de référence correspondant à un code, et une valeur de la fonction de corrélation de la porteuse Q avec le même signal de référence. Par exemple, un dispositif de calcul de l'ensemble 9 calcule la racine carrée de FI0² + FQ0².

L'ensemble 9 fournit les seize valeurs, F0 à F15, des modules des fonctions de corrélation du signal complexe constitué de la porteuse I et de la porteuse Q, corrélé avec les seize signaux de référence. Les seize valeurs F0 à F15 sont comparées entre elles par le dispositif 10. Ce dernier fournit, à une borne de sortie 19 l'indice j de la fonction de corrélation ayant le plus grand module. Cet indice j désigne le code qui module les porteuses I et Q. Le dispositif 10 fournit en outre, à une borne de sortie 20, la valeur Fj du module.

Ce démodulateur selon l'art antérieur est complexe et encombrant car il y a 32 chaînes de corrélation en parallèle.

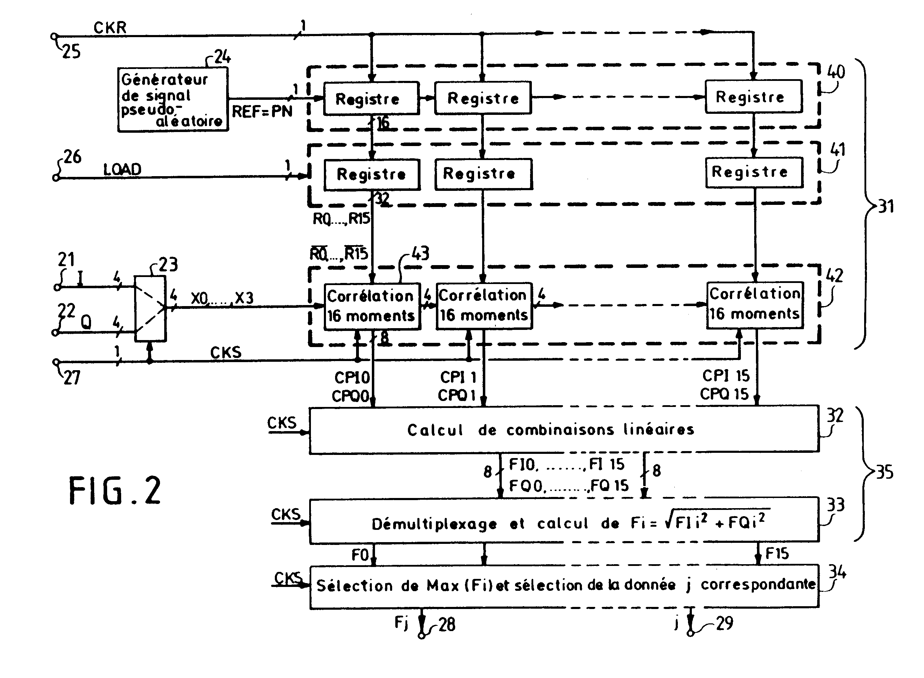

La figure 2 représente le schéma synoptique d'un exemple de réalisation d'un démodulateur d'un premier type, comportant un corrélateur selon l'invention. Ce démodulateur comporte 5 sous-ensembles :
- un multiplexeur 23 pour transmettre alternativement une valeur de la porteuse I et une valeur de la valeur Q, à un rythme double de leur fréquence d'échantillonnage ;
- un premier filtre numérique 31 adapté à la fonction pseudo-aléatoire qui étale le spectre des porteuses I et Q ;
- un second filtre numérique 35 adapté aux seize codes de Walsh, qui peuvent moduler les porteuses I et Q pour transmettre une donnée ; ce second filtre calculant seize valeurs de modules de fonctions de corrélation, F0 à F15, correspondant aux seize codes de Walsh ;
- un dispositif 34 sélectionnant le maximum parmi ces seize valeurs, et fournissant la valeur maximum Fj à une borne de sortie 28 et fournissant l'indice j, qui identifie le code modulant, à une borne de sortie 29.

Le premier filtre numérique, 31, comprend :
- un générateur 24 fournissant un signal pseudo-aléatoire, PN, identique à celui ayant été utilisé pour étaler le spectre du signal complexe à démoduler ;
- une chaîne de registres à décalage, 40, comportant 256 étages au total ;
- un ensemble 41 de 16 registres indépendants, chacun fournissant en parallèle 16 bits et leurs compléments ;
- une chaîne 42 de seize macro-cellules de corrélation, calculant chacune une valeur de fonction de corrélation partielle sur 16 bits ;
- un multiplexeur 23 ayant deux entrées de données, une sortie, et une entrée de commande.

Le signal pseudo-aléatoire PN constitue un signal de référence, REF, pour la démodulation. Les bits du signal REF sont stockés et décalés un par un dans la chaîne de registres 40 sous la commande d'un signal d'horloge CKR, au rythme de leur création par le générateur 24. Le signal CKR est fourni à une borne d'entrée 25 par un générateur de signaux d'horloge, classique, non représenté sur la figure. La chaîne de registres 40 stocke 256 bits du signal de référence. Le contenu de ces registres est transféré en bloc dans la chaîne de registres 41, sous la commande d'un signal d'horloge, load, en synchronisme avec le signal d'horloge CKS. La période du signal load est, par exemple de 10mS, alors que celle de CKR est, par exemple, de 30nS. Le signal d'horloge load est fourni à une borne d'entrée 26 par un générateur de signaux d'horloge, classique, non représenté sur la figure.

Le multiplexeur 23 est un multiplexeur à deux entrées et une sortie, dont les entrées sont reliées respectivement à des bornes d'entrée 21 et 22 recevant les porteuses I et Q à démoduler, sous la forme de valeurs numériques codées sur quatre bits, les valeurs négatives étant codées en complément à deux. La sortie du multiplexeur 23 fournit une valeur constituée de quatre bits : X0, ..., X3, à une entrée de la chaîne, 42, de seize macro-cellules de corrélation. Le multiplexeur 23 et les macro-cellules de corrélation sont commandés par un signal d'horloge CKS, à un rythme double du rythme d'échantillonnage des porteuses I et Q. Le signal d'horloge CKS est fourni à une borne d'entrée 27 par un générateur de signaux d'horloge, classique, non représenté sur la figure 2.

La première cellule de corrélation dans la chaîne 42 est une cellule 43 qui reçoit les quatre bits X0, ..., X3, représentant alternativement une valeur de la porteuse I et une valeur de la porteuse Q ; et qui reçoit 32 bits RO, ..., R15, R0, ...R15, représentant 16 bits du signal de référence stockés dans , représentant 16 bits du signal de référence stockés dans un registre de la chaîne 41. La macro-cellule 43 retransmet les quatre bits XO, ..., X3 à une macro-cellule suivante, avec un retard respectivement égal à 16, 17, 18, 19 périodes du signal d'horloge CKS ; et fournit successivement une valeur CPIO de la fonction de corrélation partielle correspondant au signal I, puis une valeur CPQO de la fonction de corrélation partielle correspondant au signal Q.

Chaque macro-cellule est identique à la macro-cellule 43 et comporte : une entrée de seize bits recevant 16 bits successifs du signal de référence et 16 bits complémentaires ; une entrée de quatre bits recevant une valeur de la suite des valeurs multiplexées des porteuses I et Q ; une sortie retransmettant les quatre bits de cette valeur à la macro-cellule suivante, avec un retard respectivement égal à 16, 17, 18, 19 périodes du signal d'horloge CKS ; et une sortie de huit bits fournissant successivement la valeur d'une première fonction de corrélation partielle, correspondant à la porteuse I, puis la valeur d'une seconde fonction de corrélation partielle correspondant à la porteuse Q, cette sortie étant reliée à une entrée du dispositif 32 de calcul de combinaisons linéaires.

La chaîne de corrélateurs 42 possède 16 sorties de 8 bits fournissant respectivement 16 valeurs de fonctions de corrélation partielles : CP10, ..., CP115, correspondant à la porteuse 1 ; puis fournissant respectivement 16 valeurs de fonctions de corrélation partielle : CPQO, ..., CPQ15, correspondant à la porteuse Q.

Le filtre 35 comporte : un dispositif 32 de calcul des combinaisons linéaires et un dispositif 33 de démultiplexage, et de calcul de modules. Le dispositif 32 calcule, sur 256 moments, la valeur de la fonction de corrélation Fli de la porteuse I avec le signal pseudo-aléatoire PN et avec chaque code de Walsh Wi, pour i = 0 à 15 ; et puis calcule, sur 256 moments, la valeur FQi de la fonction de corrélation de la porteuse Q avec le signal pseudo-aléatoire PN et avec chaque code de Walsh Wi pour i = 0 à 15 ; en combinant les valeurs CPIO, ..., CP115, respectivement CPQO, ... CPQ15 des fonctions de corrélation partielles sur 16 moments, de la porteuse I, respectivement de la porteuse Q, avec le signal de référence REF. Il est à remarquer que dans ce démodulateur le signal de référence REF est constitué uniquement par le signal pseudo-aléatoire PN, contrairement aux signaux de référence utilisés dans le dispositif connu représenté sur la figure 1.

Le dispositif 32 est un dispositif à structure "pipe-line", commandé par le signal d'horloge CKS. Il possède seize sorties de huit bits fournissant respectivement des valeurs F10, ..., FI15 qui sont des valeurs de la fonction de corrélation du signal I avec le signal de référence et avec les 16 codes de Walsh respectivement ; puis fournissant respectivement des valeurs FQO, ..., FQ15 qui sont des valeurs de la fonction de corrélation du signal Q avec le signal de référence et avec les seize codes de Walsh respectivement.

Le dispositif 33 calcule le module Fi de la fonction de corrélation, sur 256 moments, du signal complexe à démoduler, avec le signal pseudo-aléatoire et avec chaque code de Walsh Wi, pour i=0 à 15.

Le dispositif 33 reçoit puis démultiplexe les valeurs Fli et FQi, pour i = 0 à 15, et calcule le module Fi d'un vecteur ayant pour composantes Fli et FQi, en déterminant la racine carrée de Fli² + FQi². Le dispositif 33 possède seize sorties fournissant respectivement les valeurs F0, ..., F15, à 16 entrées du dispositif 34. Le dispositif 34 sélectionne la valeur la plus grande, notée Fj, parmi les valeurs Fi pour i = 0 à 15, et sélectionne l'indice j correspondant. Cet indice j désigne le code de Walsh qui est détecté par le démodulateur, autrement dit il désigne la donnée qui est transmise par les signaux I et Q. Les dispositifs 32, 33 et 34 sont commandés aussi par le signal d'horloge CKS.

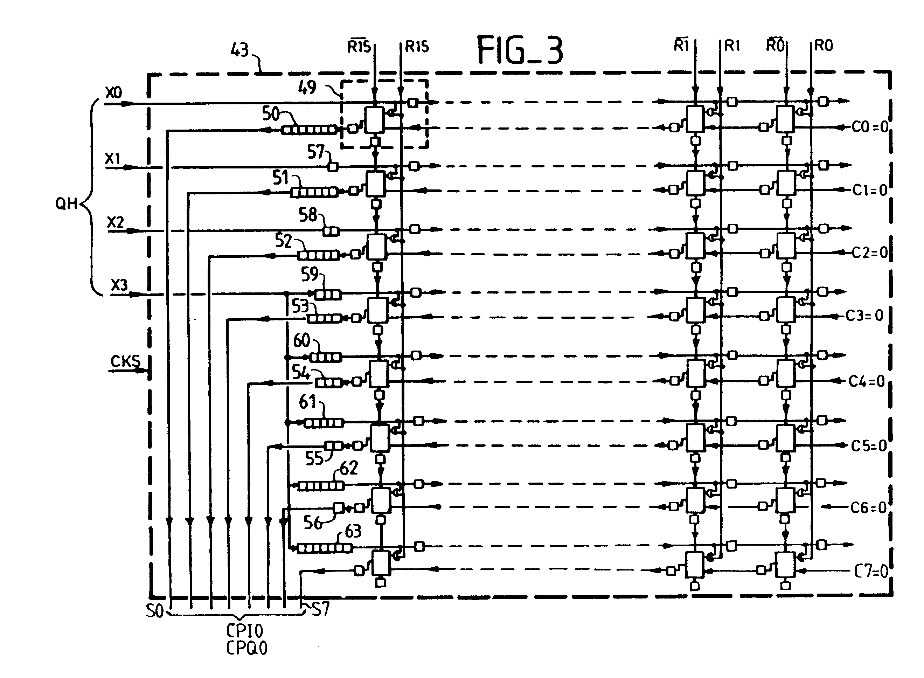

La figure 3 représente le schéma synoptique de la macro-cellule 43, les autres macro-cellules de la chaîne 42 étant identiques à la macro-cellule 43. Chaque macro-cellule a une structure systolique, constituée d'une matrice de 128 cellules identiques et travaillant sur un seul bit. Cette matrice comporte 8 lignes de 16 cellules. La première cellule, 49, de la première ligne de cellules reçoit un bit XO d'une valeur de la porteuse I ou Q. Ce bit XO est propagé d'une cellule à une autre de la première ligne, chacune avec un retard égal à une période de l'horloge CKS. La première cellule de la deuxième ligne de la matrice reçoit le bit X1 avec un retard égal à une période de l'horloge CKS, par rapport au bit X0. Ce retard est procuré par une bascule D, 57. Les cellules de la deuxième ligne retransmettent le bit X1, chacune avec un retard égal à une période l'horloge CKS.

La première cellule de la troisième ligne reçoit le bit X2 avec un retard égal à deux périodes de l'horloge CKS, retard procuré par un ensemble 58 constitué de deux bascules D. Les cellules de la troisième ligne retransmettent le bit X2, chacune avec un retard égal à une période de l'horloge CKS. La première cellule de la troisième ligne reçoit le bit X3 avec un retard égal à trois périodes de l'horloge CKS, retard procuré par un ensemble 59 de trois bascules D. Les cellules de la troisième ligne retransmettent le bit X3, chacune avec un retard égal à une période de l'horloge CKS.

La première cellule de la quatrième ligne reçoit le bit X3 avec un retard égal à trois périodes de l'horloge CKS, retard procuré par un ensemble 59 de trois bascules D. Chaque cellule de la quatrième ligne retransmet le bit X3 avec un retard égal à une période d'horloge CKS.

La première cellule de la cinquième ligne reçoit le bit X3 avec un retard égal à quatre périodes de l'horloge CKS, retard procuré par un ensemble 60 de quatre bascules D. Chaque cellule de la cinquième ligne retransmet le bit X3 avec un retard égal à une période de l'horloge CKS. La première cellule de la huitième ligne reçoit le bit X3 avec un retard égal à sept périodes du signal d'horloge CKS, retard procuré par un ensemble 63 de sept bascules D. Chaque cellule de la huitième ligne retransmet le bit X3 avec un retard égal à une période de l'horloge CKS. La première cellule de la sixième ligne reçoit le bit X3 avec un retard égal à cinq périodes de l'horloge CKS, retard procuré par un ensemble 61 de cinq bascules D. Chaque cellule de la sixième ligne retransmet le bit X3 avec un retard égal à une période de l'horloge CKS. La première cellule de la septième ligne reçoit le bit X3 avec un retard égal à six périodes du signal d'horloge CKS, retard procuré par un ensemble 62 de six bascules D. Chaque cellule de la septième ligne retransmet le bit X3 avec un retard égal à une période de l'horloge CKS. La dernière cellule de chaque ligne fournit donc l'un des bits X0, X1, X2, X3, avec un retard fonction du rang de la ligne, à une entrée de la macro-cellule suivante dans la chaîne 42.

Chaque cellule possède une entrée recevant un bit de résultat de corrélation partielle, fourni par une sortie, dite de résultat de corrélation partielle, appartenant à la cellule suivante. Dans cet exemple, il n'y a jamais de dépassement de la capacité d'une macro-cellule, par conséquent il n'est pas prévu de transmettre des bits de résultat d'une macro-cellule à une autre. Les entrées de bits de résultat de corrélation partielle des dernières cellules reçoivent respectivement des bits C0, ..., C7, ayant une valeur nulle.

Toutes les cellules de la première colonne, toutes les cellules de la seconde colonne etc..., reçoivent respectivement les bits R15 et R15, ..., R0 et R0, du signal de référence. Une entrée de retenue, de la première cellule de la première colonne, reçoit le bit R15 et fournit un bit de retenue à la cellule suivante dans la même colonne. La cellule suivante fournit à son tour un bit de retenue à une autre cellule suivante, chaque fois avec un retard égal à une période de l'horloge CKS. De même, dans les colonnes suivantes, une entrée de retenue de la première cellule reçoit respectivement R14, ...R0, et les cellules des lignes suivantes fournissent des bits de retenue aux cellules de la ligne suivante.

La sortie de résultat de corrélation partielle de chaque cellule de la première colonne fournit un bit de résultat de corrélation sur 16 moments. La première cellule de la première ligne fournit un bit S0, par l'intermédiaire d'un ensemble 50 de sept bascules D procurant un retard égal à sept périodes de l'horloge CKS. La première cellule de la deuxième ligne fournit un bit S1, par l'intermédiaire d'un ensemble 51 de six bascules D procurant un retard égal à six périodes du signal d'horloge CKS. La première cellule de la troisième ligne fournit un bit S2, par l'intermédiaire d'un ensemble 52 de cinq bascules D procurant un retard égal à cinq périodes de l'horloge CKS. La première cellule de la quatrième ligne fournit un bit S3 par l'intermédiaire d'un ensemble 53 de quatre bascules D procurant un retard égal à quatre périodes du signal d'horloge CKS. La première cellule de la cinquième ligne fournit un bit S4 par l'intermédiaire d'un ensemble 54 de trois bascules D procurant un retard égal à trois périodes de l'horloge CKS. La première cellule de la sixième ligne fournit un bit S5 par l'intermédiaire d'un ensemble 55 de deux bascules D procurant un retard égal à deux périodes de l'horloge CKS. La première cellule de la septième ligne fournit un bit S6 par l'intermédiaire d'une bascule D, 56, procurant un retard égal à une période de l'horloge CKS. La première cellule de la huitième ligne fournit directement un bit S7.

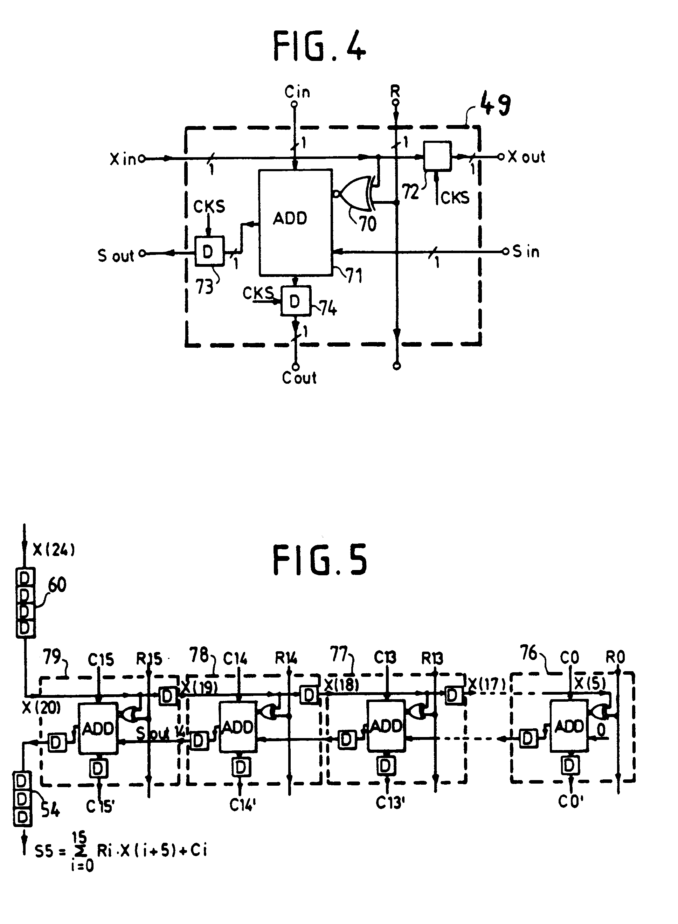

La figure 4 représente le schéma synoptique plus détaillé de l'une des cellules, 50, de la macro-cellule de corrélation 43. La cellule 50 comporte :
- une porte NON-OU exclusif, 70, ayant une première entrée recevant un bit R du signal de référence, ce bit étant en outre transmis, sans modification, à la cellule suivante dans la même colonne ; et ayant une seconde entrée recevant un bit Xin d'une valeur de la porteuse I ou de la porteuse Q ;
- un additionneur 71, ayant une première entrée qui reçoit un bit, Sin, qui est un résultat de corrélation partielle fourni par la cellule suivante sur la même ligne, et ayant une seconde entrée reliée à la sortie de la porte 70 ;
- une première bascule D, 72, ayant une entrée recevant le bit Xin ; ayant une entrée de commande recevant le signal d'horloge CKS ; et ayant une sortie fournissant un bit Xout qui est la précédente valeur du bit Xin, à la bascule suivante sur la même ligne ;
- une deuxième bascule D, 73, ayant une entrée reliée à la sortie de l'additionneur 71 ; ayant une entrée de commande recevant le signal d'horloge CKS ; et ayant une sortie fournissant un bit Sout qui est un résultat de corrélation partielle constituant un bit de la valeur d'une des fonctions de corrélation partielle des porteuses I et Q ;
- une troisième bascule D, 74, ayant une entrée reliée à une sortie de retenue de l'additionneur 71 ; ayant une entrée de commande recevant le signal d'horloge CKS ; et ayant une sortie fournissant un bit, Cout, qui constitue une retenue pour la cellule suivante dans la même colonne.

La figure 5 illustre le fonctionnement d'une ligne de la matrice de cellules de la macro-cellule 43, pour le calcul de la valeur du bit S5 de la fonction de corrélation partielle de la porteuse I ou Q. Cette ligne est constituée de seize cellules 79, 78, 77, ..., 76. La première cellule, 79, reçoit, à l'instant considéré, le bit X(20) fourni par la sortie de l'ensemble 60 de quatre bascules D. Au même instant, cet ensemble 60 reçoit sur son entrée un bit X(24). Les bits X sont retransmis successivement par chacune des cellules de la ligne en ajoutant chaque fois un retard égal à une période de l'horloge CKS. Par conséquent, les cellules de la ligne reçoivent respectivement les bits X(20), X-(19), X(18), X(17), ... X(5), à l'instant considéré.

Ces valeurs sont appliquées respectivement aux portes NON-OU exclusif de chacune des cellules pour réaliser le produit de ces bits avec les bits R15, ..., R0 du signal de référence. Dans chaque cellule, le résultat du produit est appliqué à la première entrée de l'additionneur qui lui ajoute la valeur d'un bit de retenue fourni par la cellule homologue dans la ligne précédente, et qui lui ajoute aussi le bit de résultat de corrélation partielle fourni par la cellule suivante sur la même ligne. Par exemple, dans la cellule 79, le bit de retenue C15 est additionné au résultat du produit X(20).R15 et au bit Sout 14.

La seconde entrée de chaque additionneur reçoit un bit de résultat de corrélation partielle fourni par la sortie de l'additionneur de la cellule suivante, par l'intermédiaire d'une bascule D. Chaque additionneur fournit en outre un bit de retenue, respectivement C15', ..., CO', aux cellules de la ligne suivante. La sortie de l'additionneur de la première cellule, 79, fournit la valeur du bit S5, par l'intermédiaire de la bascule D que comporte sa cellule, et de l'ensemble 54 de trois bascules D procurant un retard égal à deux périodes de l'horloge CKS. La valeur du bit S5 est ainsi égale à la somme de Ri.X(i + 5) + Ci, pour i = 0 à 15.

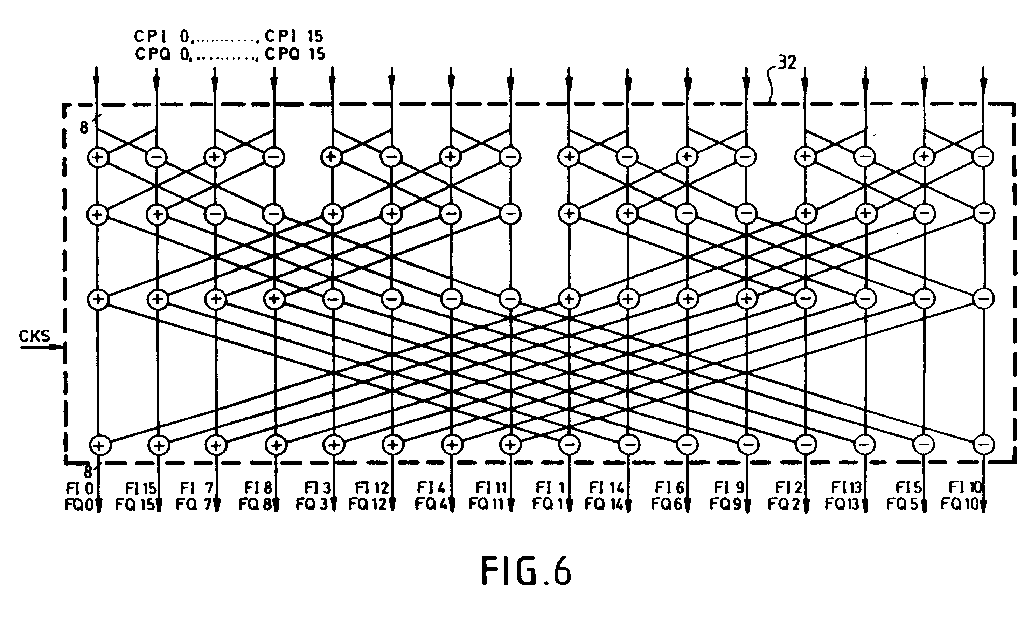

La figure 6 représente un schéma synoptique du dispositif 32 de calcul de combinaison linéaires, déterminant successivement une valeur d'une première fonction de corrélation partielle pour le signal I, puis une valeur d'une seconde fonction de corrélation partielle pour le signal Q, pour les seize codes de Walsh. Le dispositif 32 possède seize entrées recevant respectivement CPIO_{"} ..., CP115, dans cet ordre ; puis CPQO, ..., CPQ15, dans cet ordre. Ce dispositif 32 a une structure "pipe-line" comportant quatre lignes d'opérateurs, chaque opérateur calculant une combinaison linéaire de deux valeurs intermédiaires déterminées par deux opérateurs de la ligne précédente. Chaque opérateur est : soit un additionneur suivi d'un registre, soit un soustracteur suivi d'un registre. Les registres sont commandés par le signal d'horloge CKS.

La première ligne est constituée de couples d'opérateurs : un additionneur et un soustracteur, pris dans cet ordre, et calculant respectivement la somme et la différence de deux valeurs appliquées respectivement à deux entrées voisines du dispositif 32.

Les opérateurs de la deuxième ligne, constituent quatre groupes identiques comportant chacun deux additionneurs puis deux soustracteurs. Chacun des additionneurs additionne la valeur fournie par l'opérateur situé au-dessus de lui et la valeur intermédiaire fournie par l'opérateur situé deux rangs plus loin dans la ligne au-dessus. Chaque soustracteur calcule la différence entre la valeur intermédiaire fournie par l'opérateur situé au-dessus de lui et la valeur intermédiaire fournie par l'opérateur situé deux rangs avant, sur la ligne précédente.

Les opérateurs de la troisième ligne constituent deux groupes identiques comportant chacun quatre additionneurs puis quatre soustracteurs. Chaque additionneur calcule la somme de la valeur intermédiaire fournie par l'opérateur situé au-dessus de lui et de la valeur intermédiaire fournie par l'opérateur situé quatre rangs plus loin sur la ligne précédente. Chaque soustracteur calcule la différence entre la valeur intermédiaire fournie par l'opérateur situé au-dessus de lui et la valeur intermédiaire fournie par l'opérateur situé quatre rangs avant sur la ligne précédente.

La quatrième ligne d'opérateurs est constituée par huit additionneurs puis huit soustracteurs. Chaque additionneur calcule la somme de la valeur intermédiaire fournie par l'opérateur situé au-dessus de lui et de la valeur intermédiaire fournie par l'opérateur situé huit rangs plus loin sur la ligne précédente. Chaque soustracteur calcule la différence entre la valeur intermédiaire fournie par l'opérateur situé au-dessus de lui et la valeur intermédiaire fournie par l'opérateur situé huit rangs avant sur la ligne précédente. Les sorties des huit additionneurs et des huit soustracteurs de la quatrième ligne fournissent respectivement les valeurs F10, F115, F17, FIB, F13, F112, F14, FI11, FI1, F114, F16, F19, F12, F113, F15, F110, de la fonction de corrélation de la porteuse I, puis fournissent les valeurs FQO, FQ15, FQ7, FQB, FQ3, FQ12, FQ4, FQ11, FQ1, FQ14, FQ6, FQ9, FQ2, FQ13, FQ5, FQ10 de la fonction de corrélation de la porteuse Q.

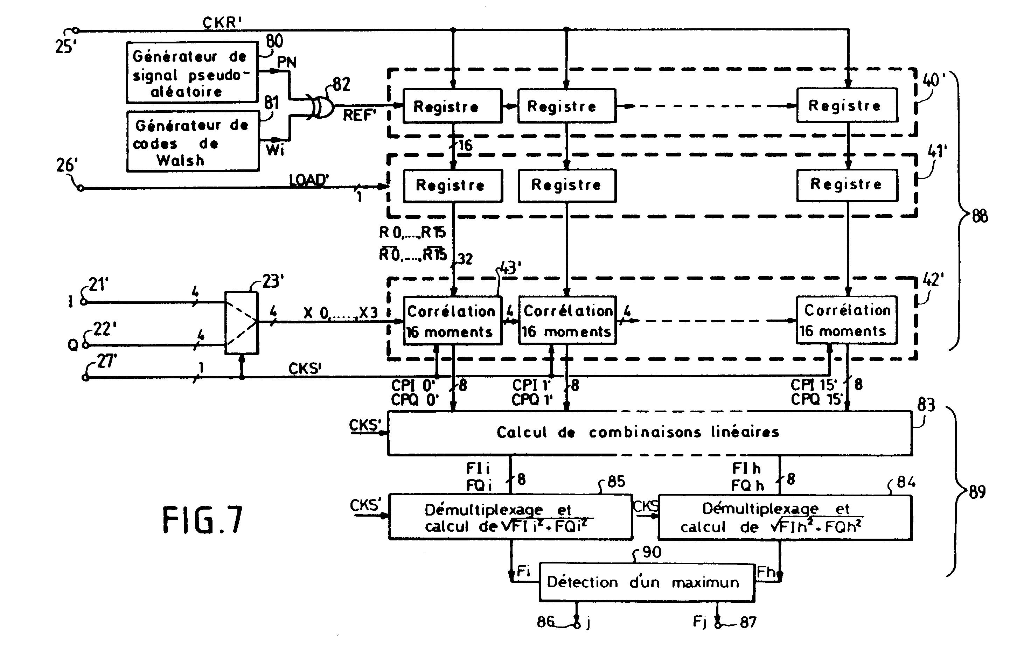

La figure 7 représente le schéma synoptique d'un exemple de réalisation d'un démodulateur d'un second type, comportant lui aussi un corrélateur selon l'invention. Les éléments identiques aux éléments du premier exemple de réalisation portent la même référence mais avec l'indice '. Cet exemple de réalisation comporte un premier filtre numérique 88 comportant notamment : deux chaînes de registres 40 et 41', un multiplexeur 23', et une chaîne 42' de macro-cellules de corrélation, qui sont identiques aux éléments décrits précédemment.

Le signal de référence REF' est différent du signal REF. Il est fourni par la sortie d'une porte OU exclusif, 82, qui réalise le produit d'un signal pseudo-aléatoire PN et d'un signal de code de Walsh Wi. Un générateur 80 fournit le signal pseudo-aléatoire PN, qui est identique à celui ayant été utilisé àpour moduler les signaux I et Q à démoduler. Un générateur 81 fournit le signal de code de Walsh Wi. Dans ce second type de démodulateur, le signal de référence REF' est donc adapté à un code de Walsh choisi parmi les M codes possibles. Cette particularité permet de simplifier le second filtre, adapté au codage de Walsh.

Le filtrage adapté au codage de Walsh est réalisé par un filtre adapté 89 comprenant : un dispositif 83 de calcul de combinaisons linéaires ; un dispositif 85 de démultiplexage et de calcul de la fonction de corrélation pour le code de Walsh Wi ; et un dispositif 84 de démultiplexage et de calcul de la fonction de corrélation pour un autre code de Walsh Wh qui est lié au code Wi. L'indice h est lié à l'indice i par la relation suivante : h = M-i.

Par exemple, si le générateur 81 fournit le code de Walsh W0, les dispositifs 85 et 84 fournissent respectivement les valeurs F0 et F15 de la fonction de corrélation, respectivement pour le code de Walsh WO et pour le code de Walsh W15. Si le générateur 81 fournit le code de Walsh W1, les sorties des dispositifs 85 et 84 fournissent respectivement les fonctions de corrélation F1 et F14 correspondant respectivement au code de Walsh W1 et au code de Walsh W14. Le démodulateur ne peut donc détecter, à un instant donné, que deux codes parmi les 16 codes de Walsh, mais c'est suffisant dans certaines applications et cela permet, en contrepartie, une grande simplification du dispositif de calcul 83, comme cela apparaîtra plus loin.

Le dispositif de calcul 83 possède seize entrées de huit bits reliées respectivement à seize sorties de la chaîne 42' de macro-cellules de corrélation. Ces entrées reçoivent respectivement les valeurs CPIO', ..., CP115' des fonctions de corrélation partielle de la porteuse I avec le signal de référence, puis les valeurs CPQO', ..., CPQ15', des fonctions de corrélation partielles de la porteuse Q avec le signal de référence. Le dispositif 83 possède deux sorties de huit bits, reliées respectivement à une entrée du dispositif 85 pour lui fournir une valeur Fli puis une valeur FQi de la fonction de corrélation de la porteuse I, respectivement de la porteuse Q, pour le code de Walsh Wi ; et une seconde sortie reliée à une entrée du dispositif 84 pour lui fournir une valeur Flh puis une valeur FQh de la fonction de corrélation de la porteuse I, respectivement de la porteuse Q, pour le code de Walsh Wh.

Le dispositif 85 démultiplexe les valeurs Fli et FQi puis calcule le module d'un vecteur ayant ces valeurs pour composantes. Ce module constitue la valeur Fi de la fonction de corrélation du signal complexe à démoduler. La valeur Fi est fournie à une entrée d'un dispositif 90 de détection d'un maximum.

Le dispositif 84 démultiplexe les valeurs Flh et FQh puis calcule le module d'un vecteur ayant ces valeurs pour composantes. La valeur Fh de ce module constitue la valeur de la fonction corrélation du signal complexe à démoduler, pour le code de Walsh Wh. La valeur Fh est appliquée à une seconde entrée du dispositif 90. Le dispositif 90 possède deux sorties reliées respectivement à deux bornes de sortie, 86 et 87, du démodulateur pour fournir respectivement deux valeurs j et Fj qui sont respectivement l'indice et la valeur de la plus grande des deux valeurs Fi et Fh. La valeur j, qui ne peut être égale qu'à i ou h, représente une donnée transmise. Les dispositifs 83, 84, 85 sont commandés par un signal d'horloge CKS', à un rythme double du rythme de l'échantillonnage de chacune des porteuses I et Q. Le signal d'horloge CKS' est fourni par un générateur de signaux d'horloge classique, non représenté sur la figure 7.

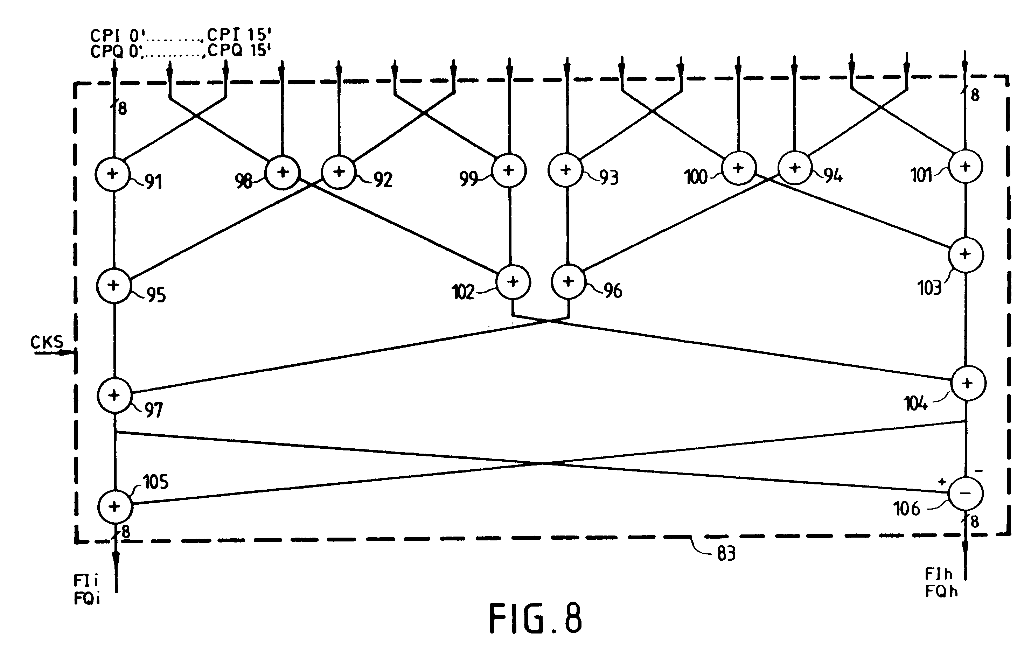

La figure 8 représente le schéma synoptique du dispositif 83 de calcul de combinaisons linéaires. Il a une structure "pipe-line" comportant quatre lignes d'opérateurs qui sont tous des additionneurs sauf un qui est un soustracteur. Chaque opérateur est suivi d'un registre commandé par le signal d'horloge CKS', et qui n'est pas représenté sur la figure. La première ligne d'opérateurs comporte quatre additionneurs, 91 à 94, chacun réalisant la somme de deux valeurs de fonctions de corrélation partielle de rang pair ; et comporte quatre additionneurs, 98 à 101, chacun réalisant la somme de deux valeurs de fonction de corrélation partielle de rang impair.

La deuxième ligne d'opérateurs comporte un additionneur 95 additionnant les valeurs intermédiaires fournies par les opérateurs 91 et 92, un opérateur 96 additionnant les valeurs intermédiaires fournies par les additionneurs 93 et 94, un additionneur 102 additionnant les valeurs intermédiaires fournies par les additionneurs 98 et 99, et un additionneur 103 calculant la somme des valeurs intermédiaires fournies par les additionneurs 100 et 101.

La troisième ligne comporte un additionneur 97 qui calcule la somme des valeurs intermédiaires fournies par les additionneurs 95 et 96 ; et comporte un additionneur 104 qui calcule la somme des valeurs intermédiaires fournies par les additionneurs 102 et 103.

La quatrième ligne comporte un additionneur 105 qui calcule la somme des valeurs intermédiaires fournies par l'additionneur 97 et par l'additionneur 104 ; et comporte un soustracteur 106 qui calcule la différence entre la valeur intermédiaire fournie par l'additionneur 97 et la valeur intermédiaire fournie par l'additionneur 104.

Il est facile de vérifier que l'additionneur 105 fournit ainsi une valeur égale à la somme de toutes les valeurs de fonctions de corrélation partielle appliquées aux entrées du dispositif 83, alors que le soustracteur 106 fournit la valeur de la différence entre la somme des valeurs des fonctions de corrélation partielle ayant un rang pair et la somme des fonctions de corrélation partielle ayant un rang impair. La sortie de l'additionneur 105 constitue la sortie du dispositif 83 qui fournit la valeur Fli, puis la valeur FQi, de la fonction de corrélation de la porteuse I, respectivement de la porteuse Q, pour le code de Walsh Wi. La sortie du soustracteur 106 constitue la sortie du dispositif 83 qui fournit la valeur Flh, puis la valeur FQh, de la fonction de corrélation de la porteuse I, respectivement de la porteuse, Q, pour le code de Walsh Wh.

Comme il apparaît sur le schéma de la figure 8, le dispositif de calcul 83 est plus simple à réaliser que le dispositif de calcul 32 représenté sur la figure 6. Le second type de démodulateur a un schéma suffisamment simple pour qu'il soit possible de l'intégrer entièrement en un seul circuit intégré, en utilisant une technologie connue permettant une largeur de trait de 1,25 micron. Il permet donc une réalisation beaucoup plus simple que les dispositifs corrélateurs classiques décrits précédemment.

L'invention est applicable notamment à la réalisation de démodulateurs MSK, PSK, ou OQPSK, à étalement de spectre et à codage M-aire orthogonal, pour des matériels aéronautiques embarqués, pour lesquels l'encombrement doit être aussi faible que possible.

## Revendications

1. Corrélateur numérique asynchrone pour corréler un signal binaire de référence (REF), avec un signal complexe constitué d'une première et d'une second porteuse (I, Q) modulées par une fonction pseudo-aléatoire (PN) et par un codage M-aire orthogonal de Walsh, ces deux porteuses étant échantillonnées et numérisées, caractérisé en ce qu'il comporte :
- un multiplexeur (23) pour transmettre alternativement une valeur (I) de la première porteuse et une valeur (Q) de la seconde porteuse, avec une période égale à la moitié de leur période d'échantillonnage ;
- un premier filtre numérique (31) adapté à la fonction pseudo-aléatoire (PN), comportant une chaîne de registres (41) pour stocker L bits consécutifs du signal de référence (REF) et une chaîne (42) de M macro-cellules de corrélation (43) recevant la suite des valeurs multiplexées de la première et de la seconde porteuse (I, Q), chaque macro-cellule (43) calculant la valeur (CPIO, ..., CP115) d'une première fonction, dite de corrélation partielle, entre N bits du signal de référence et N valeurs de la première porteuse (1), puis calculant la valeur (CPQO, ..., CPQ15) d'une seconde fonction, dite de corrélation partielle, entre N bits du signal de référence et N valeurs de la seconde porteuse (Q), N étant égal à L/M ;
- un second filtre numérique (35) comportant des moyens de calcul (32) pour déterminer la valeur de combinaisons linéaires des valeurs des premières fonctions de corrélation partielle (CPIO, . , CP115), puis de combinaisons linéaires des valeurs des secondes fonctions de corrélation partielle (CPQO, .... CPQ15), adaptés aux codes de Walsh, les coefficients des combinaisons linéaires étant inchangés et étant égaux à ±1 ; et comportant des moyens (33) pour démultiplexer les valeurs des combinaisons linéaires (Fli, FQi), et déterminer le module (Fi) d'un vecteur ayant pour composantes les valeurs de ces deux combinaisons linéaires (Fli, FQi).

2. Corrélateur selon la revendication 1, caractérisé en ce que chaque macro-cellule de corrélation (43) a une structure systolique, comportant : une pluralité de lignes de N cellules de corrélation (49), chaque cellule recevant un bit (XO, ..., X3) des valeurs multiplexées (I, Q) et retransmettant ce bit à une cellule voisine dans la même ligne, avec un retard égal à une demi-période d'échantillonnage ; recevant un bit (R15, R15,...,R0, RO) du signal de référence et retransmettant ce bit à une cellule homologue dans la ligne suivante ; recevant un bit de retenue (Cin) fourni par une cellule homologue dans la ligne précédente ; fournissant, avec un retard égal à une demi-période d'échantillonnage, un bit de retenue (Cout) à une cellule homologue dans la ligne suivante ; recevant un bit (Sin) résultat de corrélation partielle, fourni par la cellule la suivant dans la même ligne ; fournissant, avec un retard égal à une demi-période d'échantillonnage, un bit résultat de corrélation partielle (Sout), à la cellule la précédant dans la même ligne ;
en ce que chaque ligne de N cellules de corrélation comporte en outre :
- une chaîne de registres (50, ..., 56) pour retarder le bit résultat de corrélation partielle (S0, ..., S7) qu'elle fournit, d'un retard fonction du rang de la ligne dans la macro-cellule (43) ;
- une chaîne de registre (57, ..., 63) pour retarder le bit (X0, ..., X3) des valeurs multiplexées (I, Q) qu'elle reçoit, d'un retard fonction du rang de la ligne dans la macro-cellule (43).

3. Corrélateur selon la revendication 2, caractérisé en ce que chaque cellule de corrélation (49) comporte :
- une porte OU exclusif (70) dont une entrée reçoit un bit (Xin) d'une valeur (I, Q) des signaux multiplexés, et une entrée reçoit un bit (R) du signal de référence ;
- une bascule (72), retransmettant ledit bit (Xin) d'une valeur des signaux multiplexés, sous la commande d'un signal d'horloge (CKS) à une fréquence double de la fréquence d'échantillonnage ;
- un additionneur (71) dont une entrée est reliée à la sortie de la porte OU exclusif (70) ; une entrée reçoit un bit de résultat de corrélation partielle (Sin) fourni par la cellule suivante sur la même ligne ; et une entrée reçoit un bit de retenue (Cin) fourni par la cellule homologue dans la ligne précédente ;
- une bascule (73) retransmettant un bit de résultat de corrélation partielle (Sout) fourni par une première sortie de l'additionneur (71), sous la commande du signal d'horloge (CKS) ;
- une bascule (74) retransmettant un bit de retenue (Cout) fourni par une seconde sortie de l'additionneur (72), sous la commande du signal d'horloge (CKS).

4. Démodulateur numérique pour démoduler un signal complexe constitué d'une première et d'une seconde porteuse (I, Q), en quadrature, dont le spectre est étalé par une fonction pseudo-aléatoire et qui sont modulées par un codage M-aire orthogonal, selon une modulation PSK, ou MSK, ou QPSK ;
caractérisé en ce qu'il comporte un corrélateur numérique asynchrone pour corréler un signal binaire de référence (REF), avec un signal complexe constitué d'une première et d'une seconde porteuse (I, Q) modulées par une fonction pseudo-aléatoire et par un codage M-aire orthogonal de Walsh, ces deux porteuses étant échantillonnées et numérisées, ledit corrélateur comportant :
- un multiplexeur (23) pour transmettre alternativement une valeur (I) de la première porteuse et une valeur (Q) de la seconde porteuse, avec une période égale à la moitié de leur période d'échantillonnage ;
- un premier filtre numérique (31) adapté à la fonction pseudo-aléatoire (PN), comportant une chaîne de registres (41) pour stocker L bits consécutifs du signal de référence (REF) et une chaîne (42) de M macro-cellules de corrélation (43) recevant la suite des valeurs multiplexées de la première et de la seconde porteuse (I, Q), chaque macro-cellule (43) calculant la valeur (CPIO, ..., CP115) d'une première fonction, dite de corrélation partielle, entre N bits du signal de référence et N valeurs de la première porteuse (1), puis calculant la valeur (CPQO, ..., CPQ15) d'une seconde fonction, dite de corrélation partielle, entre N bits du signal de référence et N valeurs de la seconde porteuse (Q), N étant égal à L/M ;
- un second filtre (35) comportant des moyens (32) pour calculer les valeurs d'une première et d'une seconde combinaison linéaire (Fln, FQn) de fonctions de corrélation partielle, démultiplexer ces deux valeurs et calculer le module (Fn) d'un vecteur ayant pour composantes ces deux valeurs, pour chacun des M codes M-aires de Walsh,
et en ce qu'il comporte, en outre, des moyens (34) pour déterminer le module (Fj) le plus grand parmi ces M modules et en déduire quel est le code (j) qui module les deux porteuses (I, Q).

5. Démodulateur numérique pour démoduler un signal complexe constitué d'une première et d'une seconde porteuse, en quadrature, dont le spectre est étalé par une fonction pseudo-aléatoire, et qui sont modulées par un codage M-aire orthogonal, selon une modulation PSK ou MSK ou QPSK ;
caractérisé en ce qu'il comporte un corrélateur numérique asynchrone pour corréler un signal binaire de référence (REF), avec un signal complexe constitué d'une première et d'une seconde porteuse (I, Q) modulées par une fonction pseudo-aléatoire et par un codage M-aire orthogonal de Walsh, ces deux porteuses étant échantillonnées et numérisées,
- un générateur (80) fournissant un signal binaire pseudo-aléatoire identique à celui ayant été utilisé pour étaler le spectre ;
- un générateur (81) de codes M-aires orthogonaux fournissant un signal binaire (Wi) selon l'un de ces codes ;
- une porte OU exclusif (83), pour fournir au corrélateur un signal de référence (REF') constitué par le produit des signaux binaires (PN, Wi) fournis respectivement par les deux générateurs (80, 81)
le corrélateur comportant :
- un multiplexeur (23) pour transmettre alternativement une valeur (I) de la première porteuse et une valeur (Q) de la seconde porteuse, avec une période égale à la moitié de leur période d'échantillonnage ;
- un premier filtre numérique (31) adapté à la fonction pseudo-aléatoire (PN), comportant une chaîne de registres (41) pour stocker L bits consécutifs du signal de référence (REF) et une chaîne (42) de M macro-cellules de corrélation (43) recevant la suite des valeurs multiplexées de la première et de la seconde porteuse (I, Q), chaque macro-cellule (43) calculant la valeur (CPIO, ..., CP115) d'une première fonction, dite de corrélation partielle, entre N bits du signal de référence et N valeurs de la première porteuse (1), puis calculant la valeur (CPQO, ..., CPQ15) d'une seconde fonction, dite de corrélation partielle, entre N bits du signal de référence et N valeurs de la seconde porteuse (Q), N étant égal à L/M ;
- un second filtre (89) comportant des moyens (83, 84) pour calculer les valeurs (Fli, FQi) d'une première et d'une seconde combinaison linéaire de fonctions de corrélation partielle, démultiplexer ces deux valeurs et calculer le module (F;) d'un vecteur ayant pour composante ces deux valeurs, pour au moins l'un des codes M-aires (Wi, Wh).

6. Démodulateur selon la revendication 5, pour démoduler un signal complexe constitué d'une première et d'une seconde porteuse (I, Q), en quadrature, dont le spectre est étalé par une fonction pseudo-aléatoire, et qui sont modulées par un codage M-aire, de Walsh, caractérisé en ce que les moyens (83) pour calculer successivement la valeur (Fli, FQi) d'une première et d'une seconde combinaison linéaire des fonctions de corrélation partielle (CPIO', ..., CP115', CPQO', ..., CPQ15') comportent :
- une pluralité d'additionneurs (91 à 97) pour additionner toutes les valeurs (CPIO', CP!2', .... CP114' ; CPQO', CPQ2', ..., CPQ14') des fonctions de corrélation partielle ayant un rang pair ;
- une pluralité d'additionneurs (98 à 103) pour additionner toutes les valeurs (CP!1', CP!3', .... CP115' ; CPQ1', CPQ3', ..., CPQ15') des fonctions de corrélation partielle ayant un rang impair ;
- un additionneur (105) pour additionner les valeurs fournies par ces deux pluralités d'additionneurs et fournir ainsi successivement la valeur (Fli, FQi) d'une première et d'une seconde composante de la fonction de corrélation pour un premier code de Walsh (Wi) qui est celui fourni par le générateur de codes (81) ;
- un soustracteur (106) pour soustraire entre elles les valeurs fournies par les deux pluralités d'additionneurs et fournir ainsi successivement la valeur (Flh, FQh) d'une première et d'une seconde composante de la fonction de corrélation pour un second code de Walsh (Wh).

## Claims

1. Asynchronous digital correlator for correlating a binary reference signal (REF), with a complex signal consisting of a first and a second carrier (I, Q) which are modulated by a pseudo-random function (PN) and by an M-ary orthogonal Walsh coding, these two carriers being sampled and digitized, characterized in that it includes:
- a multiplexer (23) for transmitting alternately a value (I) of the first carrier and a value (Q) of the second carrier, with a period equal to half their sampling period;
- a first digital filter (31) matched to the pseudo-random function (PN), including an array of registers (41) for storing L consecutive bits of the reference signal (REF) and an array (42) of M correlation macro-cells (43) receiving the sequence of the multiplexed values of the first and of the second carrier (I, Q), each macro-cell (43) calculating the value (CPIO, ..., CP115) of a first function, termed partial correlation, between N bits of the reference signal and N values of the first carrier (I), then calculating the value (CPQO, ..., CPQ15) of a second function, termed partial correlation, between N bits of the reference signal and N values of the second carrier (Q), N being equal to L/M;
- a second digital filter (35) including calculating means (32) for determining the value of linear combinations of the values of the first partial correlation functions (CPIO, ..., CP115), then of linear combinations of the values of the second partial correlation functions (CPQO, ..., CPQ15), which means are matched to the Walsh codes, the coefficients of the linear combinations being unchanged and being equal to ±1; and including means (33) for demultiplexing the values of the linear combinations (Fli, FQi), and determining the modulus (Fi) of a vector having the values of these two linear combinations (Fli, FQi) as components.

2. Correlator according to Claim 1, characterized in that each correlation macro-cell (43) has a systolic structure, including: a plurality of lines of N correlation cells (49) each cell receiving a bit (X0, ..., X3) of the multiplexed values (I, Q) and retransmitting this bit to a neighbouring cell in the same line, with a delay equal to one sampling half-period; receiving a bit (R15, R15, ..., R0, RO) of the reference signal and retransmitting this bit to a homologous cell in the following line; receiving a carry bit (Cin) provided by a homologous cell in the preceding line; providing, with a delay equal to a sampling half-period, a carry bit (Cout) to a homologous cell in the following line; receiving a partial correlation result bit (Sin) provided by the cell following it in the same line; providing with a delay equal to a sampling half-period, a partial correlation result bit (Sout) to the cell preceding it in the same line;
in that each line of N correlation cells furthermore includes:
- an array of registers (50, ..., 56) for delaying the partial correlation result bit (SO, ..., S7) which it provides, by a delay dependent on the rank of the line in the macro-cell (43);
- an array of registers (57, ..., 63) for delaying the bit (XO, ..., X3) of the multiplexed values (I, Q) which it receives, by a delay dependent on the rank of the line in the macro-cell (43).

3. Correlator according to Claim 2, characterized in that each correlation cell (49) includes:
- an exclusive OR gate (70), one input of which receives a bit (Xin) of a value (I, Q) of the multiplexed signals, and one input of which receives a bit (R) of the reference signal;
- a flip-flop (72), retransmitting said bit (Xin) of a value of the multiplexed signals, under the control of a clock signal (CKS) at a frequency twice the sampling frequency;
- an adder (71) one input of which is connected to the output of the exclusive OR gate (70); one input of which receives a partial correlation result bit (Sin) provided by the following cell in the same line; and one input of which receives a carry bit (Cin) provided by the homologous cell in the preceding line;
- a flip-flop (73) retransmitting a partial correlation result bit (Sout) provided by a first output of the adder (71), under the control of the clock signal (CKS);
- a flip-flop (74) retransmitting a carry bit (Cout) provided by a second output of the adder (72), under the control of the clock signal (CKS).

4. Digital demodulator for demodulating a complex signal consisting of a first and a second carrier (I, Q), in quadrature, whose spectrum is spread by a pseudo-random function and which are modulated by an M-ary orthogonal coding, according to a PSK, or MSK, or QPSK modulation;
characterized in that it includes an asynchronous digital correlator for correlating a binary reference signal (REF), with a complex signal consisting of a first and a second carrier (I, Q) which are modulated by a pseudo-random function and by an M-ary orthogonal Walsh coding, these two carriers being sampled and digitized, the said correlator including:
- a multiplexer (23) for transmitting alternately a value (I) of the first carrier and a value (Q) of the second carrier, with a period equal to half their sampling period;
- a first digital filter (31) matched to the pseudo-random function (PN), including an array of registers (41) for storing L consecutive bits of the reference signal (REF) and an array (42) of M correlation macro-cells (43) receiving the sequence of the multiplexed values of the first and of the second carrier (I, Q), each macro-cell (43) calculating the value (CPIO, ..., CP115) of a first function, termed partial correlation, between N bits of the reference signal and N values of the first carrier (I), then calculating the value (CPQO, ..., CPQ15) of a second function, termed partial correlation, between N bits of the reference signal and N values of the second carrier (Q), N being equal to L/M;
- a second filter (35) including means (32) for calculating the values of a first and of a second linear combination (Fln, FQn) of partial correlation functions, demultiplexing these two values and calculating the modulus (Fn) of a vector having these two values as components, for each of the M Walsh M-ary codes,
- and in that it furthermore includes means (34) for determining the largest modulus (Fj) among these M moduli and deducing therefrom which is the code (j) which modulates the two carriers (I, Q).

5. Digital demodulator for demodulating a complex signal consisting of a first and a second carrier, in quadrature, whose spectrum is spread by a pseudo-random function and which are modulated by an M-ary orthogonal coding, according to a PSK, or MSK, or QPSK modulation;
characterized in that it includes an asynchronous digital correlator for correlating a binary reference signal (REF), with a complex signal consisting of a first and a second carrier (I, Q) which are modulated by a pseudo-random function and by an M-ary orthogonal Walsh coding, these two carriers being sampled and digitized,
- a generator (80) providing a pseudo-random binary signal identical to that having been used to spread the spectrum;
- a generator (81) of M-ary orthogonal codes providing a binary signal (Wi) according to one of these codes;
- an exclusive OR gate (83) for providing the correlator with a reference signal (REF') consisting of the product of the binary signals (PN, Wi) provided by the two generators (80, 81) respectively;
the correlator including:
- a multiplexer (23) for transmitting alternately a value (I) of the first carrier and a value (Q) of the second carrier, with a period equal to half their sampling period;
- a first digital filter (31) matched to the pseudo-random function (PN), including an array of registers (41) for storing L consecutive bits of the reference signal (REF) and an array (42) of M correlation macro-cells (43) receiving the sequence of the multiplexed values of the first and of the second carrier (I, Q), each macro-cell (43) calculating the value (CPIO, ..., CP115) of a first function, termed partial correlation, between N bits of the reference signal and N values of the first carrier (I), then calculating the value (CPQO, ..., CPQ15) of a second function, termed partial correlation, between N bits of the reference signal and N values of the second carrier (Q), N being equal to L/M;
- a second filter (89) including means (83, 84) for calculating the values (Fli, FQi) of a first and of a second linear combination of partial correlation functions, demultiplexing these two values and calculating the modulus (Fᵢ) of a vector having these two values as components, for at least one of the M-ary codes (Wi, Wh).

6. Demodulator according to Claim 5, for demodulating a complex signal consisting of a first and a second carrier (I, Q), in quadrature, whose spectrum is spread by a pseudo-random function, and which are modulated by an M-ary Walsh coding, characterized in that the means (83) for calculating successively the value (Fli, FQi) of a first and of a second linear combination of the partial correlation functions (CPIO', ..., CP115', CPQO', ..., CPQ15') include:
- a plurality of adders (91 to 97) for adding all the values (CPIO', CP12', ..., CP114'; CPQO', CPQ2', ..., CPQ14') of the partial correlation functions having an even rank;
- a plurality of adders (98 to 103) for adding all the values (CP11', CPI3', ..., CP115'; CPQ1', CPQ3', ..., CPQ15') of the partial correlation functions having an odd rank;
- an adder (105) for adding the values provided by these two pluralities of adders and thus providing successively the value (Fli, FQi) of a first and of a second component of the correlation function for a first Walsh code (Wi) which is that provided by the code generator (81);
- a subtractor (106) for subtracting amongst them the values provided by the two pluralities of adders and thus providing successively the value (Flh, FQh) of a first and of a second component of the correlation function for a second Walsh code (Wh).

## Patentansprüche

1. Asynchroner digitaler Korrelator zum Korrelieren eines binären Referenzsignals (REF) mit einem komplexen Signal, das aus einer ersten und einer zweiten Trägerwelle (I, Q) gebildet ist, die durch eine pseudozufällige Funktion (PN) und durch eine orthogonale Walsh-M-Flächencodierung moduliert sind, wobei diese beiden Trägerwellen abgetastet und digitalisiert werden, dadurch gekennzeichnet, daß er umfaßt:
- einen Multiplexierer (23) für die abwechselnde Übertragung eines Wertes (I) der ersten Trägerwelle und eines Wertes (Q) der zweiten Trägerwelle mit einer Periode, die gleich der Hälfte ihrer Abtastperiode ist;
- ein erstes digitales Filter (31), das an die Pseudozufallsfunktion (PN) angepaßt ist, mit einer Registerkette (41) zum Speichern von L aufeinanderfolgenden Bits des Referenzsignals (REF) und einer Kette (42) von M Korrelationsmakrozellen (43), die die Folge der multiplexierten Werte der ersten und der zweiten Trägerwelle (I, Q) empfangen, wobei jede Makrozelle (43) den Wert (CP10, ..., CP115) einer ersten sogenannten Partialkorrelationsfunktion zwischen N Bits des Referenzsignals und N Werten der ersten Trägerwelle (I) berechnet und dann den Wert (CPQO, ..., CPQ15) einer zweiten sogenannten Partialkorrelationsfunktion zwischen N Bits des Referenzsignals und N Werten der zweiten Trägerwelle (Q) berechnet, wobei N gleich L/M ist;
- ein zweites digitales Filter (35), mit Rechenmitteln (32) für die Bestimmung des Wertes der Linearkombinationen der Werte der ersten Partialkorrelationsfunktionen (CPIO, ..., CP115), dann der Linearkombinationen der Werte der zweiten Partialkorrelationsfunktionen (CPQO ..., CPQ15), die an die Walsh-Codes angepaßt sind, wobei die Koeffizienten der Linearkombinationen unverändert und gleich ±1 sind; und mit Mitteln (33) zum Demultiplexieren der Werte der Linearkombinationen (Fli, FQi) und zum Bestimmen der Länge (Fi) eines Vektors, der als Komponenten die Werte dieser beiden Linearkombinationen (Fli, FQi) besitzt.

2. Korrelator gemäß Anspruch 1, dadurch gekennzeichnet, daß jede Korrelationsmakrozelle (43) eine systolische Struktur besitzt, mit: mehreren Zeilen von N Korrelationszellen (49), wobei jede Zelle ein Bit (X0, ..., X3) der multiplexierten Werte (I, Q) empfängt und dieses Bit an eine benachbarte Zelle derselben Zeile mit einer Verzögerung überträgt, die gleich einer halben Abtastperiode ist; ein Bit (R15, R15, ...,RO, RO) des Referenzsignals empfängt und dieses Bit an eine homologe Zelle in der folgenden Zeile überträgt; ein Übertragsbit (Cin) empfängt, das von einer homologen Zelle in der vorhergehenden Zeile geliefert wird; ein Übertragsbit (Cout) mit einer Verzögerung, die gleich einer halben Abtastperiode ist, an eine homologe Zelle in der folgenden Zeile liefert; ein Bit (Sin), welches das Ergebnis der Partilalkorrelation ist und von der ihr folgenden Zelle in derselben Zeile geliefert wird, empfängt; ein Ergebnisbit der Partialkorrelation (Sout) mit einer Verzögerung, die gleich einer halben Abtastperiode ist, an die ihr vorhergehende Zelle in derselben Zeile liefert;
daß jede Zeile von N Korrelationszellen außerdem enthält:
- eine Kette von Registern (50, ..., 56) zum Verzögern des Ergebnisbits der Partialkorrelation (S0, ..., S7), das sie mit einer vom Rang der Zeile in der Makrozelle (43) abhängenden Verzögerung ausgibt;
- eine Registerkette (57, ..., 63) zum Verzögern des Bits (X0, ..., X3) der multiplexierten Werte (I, Q), das sie mit einer vom Rang der Zeile in der Makrozelle (43) abhängenden Verzögerung empfängt.

3. Korrelator gemäß Anspruch 2, dadurch gekennzeichnet, daß jede Korrelationszelle (49) umfaßt:
- ein Exklusiv-ODER-Gatter (70), wovon ein Eingang ein Bit (Xin) eines Wertes (I, Q) der multiplexierten Signale empfängt und ein Eingang ein Bit (R) des Referenzsignals empfängt;
- eine Kippschaltung (72), die das genannte Bit (Xin) eines Wertes der multiplexierten Signale unter der Steuerung eines Taktsignals (CKS) mit einer Frequenz, die doppelt so groß wie die Abtastfrequenz ist, überträgt;
- einen Addierer (71), wovon ein Eingang mit dem Ausgang des Exklusiv-ODER-Gatters (70) verbunden ist; ein Eingang ein Ergebnisbit der Partialkorrelation (Sin) empfängt, das von der folgenden Zelle derselben Zeile geliefert wird; und ein Eingang ein Übertragsbit (Cin) empfängt, das von der homologen Zelle in der vohergehenden Zeile geliefert wird;
- eine Kippschaltung (73), die ein Ergebnisbit der Partialkorrelation (Sout), das von einem ersten Ausgang des Addierers (71) ausgegeben wird, unter der Steuerung des Taktsignals (CKS) überträgt;
- eine Kippschaltung (74), die ein Übertragsbit (Cout), das von einem zweiten Ausgang des Addierers (72) ausgegeben wird, unter der Steuerung des Taktsignals (CKS) überträgt.

4. Digitaler Demodulator zum Demodulieren eines komplexen Signals, das von einer ersten und einer zweiten Trägerwelle (I, Q) gebildet ist, die um 90 phasenverschoben sind, deren Spektrum durch eine Pseudozufallsfunktion verbreitert ist und die durch eine orthogonale Walsh-M-Flächencodierung gemäß einer PSK-oder MSK- oder QPSK-Modulation moduliert sind;
dadurch gekennzeichnet, daß er einen asynchronen digitalen Korrelator enthält, um ein binäres Referenzsignal (REF) mit einem komplexen Signal zu korrelieren, das von einer ersten und einer zweiten Trägerwelle (I, Q) gebildet ist, die durch eine Pseudozufallsfunktion und durch eine orthogonale Walsh-M-Flächencodierung moduliert sind, wobei diese beiden Trägerwellen abgetastet und digitalisiert werden, wobei der Korrelator umfaßt:
- einen Multiplexierer (23) für die abwechselnde Übertragung eines Wertes (I) der ersten Trägerwelle und eines Wertes (Q) der zweiten Trägerwelle mit einer Periode, die gleich der halben Abtastperiode ist;
- ein erstes digitales Filter (31), das an die Pseudozufallsfunktion (PN) angepaßt ist, mit einer Kette von Registern (41), um L aufeinanderfolgende Bits des Referenzsignals (REF) zu speichern, und einer Kette (42) von M Korrelationsmakrozellen (43), die die Folge der multiplexierten Werte der ersten und der zweiten Trägerwelle (I, Q) empfangen, wobei jede Makrozelle (43) den Wert (CPIO, CP115) einer ersten sogenannten Partialkorrelationsfunktion zwischen N Bits des Referenzsignals und N Werten der ersten Trägerwelle (I) berechnet, dann den Wert (CPQO, ..., CPQ15) einer zweiten sogenannten Partialkorrelationsfunktion zwischen N Bits des Referenzsignals und N Werten der zweiten Trägerwelle (Q) berechnet, wobei N gleich L/M ist;
- ein zweites Filter (35), das Mittel (32) enthält, um für jeden der M Walsh-M-Flächencodes die Werte einer ersten und einer zweiten Linearkombination (Fln, FQn) der Partialkorrelationsfunktionen zu berechnen, diese Werte zu demultiplexieren und den Betrag (Fn) eines Vektors zu berechnen, der als Komponenten diese beiden Werte besitzt,
und daß er außerdem Mittel (34) umfaßt, um die größte Länge (Fj) von diesen M Längen zu bestimmen und daraus abzuleiten, welches derjenige Code (j) ist, der die beiden Trägerwellen (I, Q) moduliert.

5. Digitaler Demodulator zum Demodulieren eines komplexen Signals, das aus einer ersten und einer zweiten Trägerwelle gebildet ist, die um 90 phasenverschoben sind, deren Spektrum durch eine Pseudozufallsfunktion verbreitert ist und die durch eine orthogonale M-Flächencodierung gemäß einer PSK- oder MSK- oder QPSK-Modulation moduliert sind;
dadurch gekennzeichnet, daß er einen asynchronen digitalen Korrelator enthält, um ein binäres Referenzsignal (REF) mit einem komplexen Signal zu korrelieren, das von einer ersten und einer zweiten Trägerwelle (I, Q) gebildet ist, die durch eine Pseudozufallsfunktion und durch eine orthogonale Walsh-M-Flächencodierung moduliert sind, wobei diese beiden Trägerwellen abgetastet und digitalisiert werden,
- einen Generator (80), der ein pseudozufälliges Binärsignal ausgibt, das mit demjenigen identisch ist, das für die Verbreiterung des Spektrums verwendet worden ist;
- einen Generator (81) für orthogonale M-Flächencodes, der ein binäres Signal (Wi) gemäß einem dieser Codes ausgibt;
- ein Exklusiv-ODER-Gatter (83), um an den Korrelator ein Referenzsignal (REF') zu liefern, das vom Produkt der binären Signale (PN, Wi) gebildet ist, die von den beiden entsprechenden Generatoren (80, 81) ausgegeben werden;
wobei der Korrelator umfaßt:
- einen Multiplexierer (23) zum abwechselnden Übertragen eines Wertes (I) der ersten Trägerwelle und eines Wertes (Q) der zweiten Trägerwelle mit einer Periode, die gleich der Hälfte ihrer Abtastperiode ist;
- ein erstes digitales Filter (31), das an die Pseudozufallsfunktion (PN) angepaßt ist, mit einer Kette von Registern (41) zum Speichern von L aufeinanderfolgenden Bits des Referenzsignals (REF) und einer Kette (42) von M Korrelationsmakrozellen (43), die die Folge der multiplexierten Werte der ersten und der zweiten Trägerwelle (I, Q) empfängt, wobei jede Makrozelle (43) den Wert (CPIO, ..., CP115) einer ersten sogenannten Partialkorrelationsfunktion zwischen N Bits des Referenzsignals und N Werten der ersten Trägerwelle (I) berechnet und dann den Wert (CPQO, ..., CPQ15) einer zweiten sogenannten Partialkorrelationsfunktion zwischen N Bits des Referenzsignals und N Werten der zweiten Trägerwelle (Q) berechnet, wobei N gleich L/M ist;
- ein zweites Filter (89), das Mittel (83, 84) enthält, um für wenigstens einen der M-Flächencodes (W_{;}, Wₕ) die Werte (Fli, FQi) einer ersten und einer zweiten Linearkombination von Partialkorrelationsfunktionen zu berechnen, diese beiden Werte zu demultiplexieren und den Betrag (Fᵢ) eines Vektors zu berechnen, der als Komponenten diese beiden Werte besitzt.

6. Demodulator gemäß Anspruch 5, für die Demodulation eines komplexen Signals, das von einer ersten und einer zweiten Trägerwelle (I, Q) gebildet ist, die um 90 phasenverschoben sind, deren Spektrum durch eine Pseudozufallsfunktion verbreitert ist und die durch eine Walsh-M-Flächencodierung moduliert sind, dadurch gekennzeichnet, daß die Mittel (83) für die aufeinanderfolgende Berechnung des Wertes (Fli, FQi) einer ersten und einer zweiten Linearkombination der Partialkorrelationsfunktionen (CPIO', ..., CP115', CPQO', ..., CPQ15') umfassen:
- mehrere Addierer (91 bis 97), um sämtliche Werte (CPIO', CP12', ..., CP114'; CPQO', CPQ2', ..., CPQ14') der Partialkorrelationsfunktionen mit geradem Rang zu addieren;
- mehrere Addierer (98 bis 103) um sämtliche Werte (CP11', CP13', ..., CP115'; CPQ1', CPQ3', ..., CPQ15') der Partialkorrelationsfunktionen mit ungeradem Rang zu addieren;
- einen Addierer (105) zum Addieren der Werte, die von diesen beiden Gruppen von jeweils mehreren Addierern ausgegeben werden, und zum aufeinanderfolgenden Ausgeben des Wertes (Fli, FQi) einer ersten und einer zweiten Komponente der Korrelationsfunktion für einen ersten Walsh-Code (Wi), welcher derjenige ist, der vom Code-Generator (81) ausgegeben wird;
- einen Subtrahierer (106) zum Subtrahieren der Werte, die von den beiden Gruppen von jeweils mehreren Addierern ausgegeben werden, voneinander und zum aufeinanderfolgenden Ausgeben des Wertes (Flh, FQh) einer ersten und einer zweiten Komponente der Korrelationsfunktion für einen zweiten Walsh-Code (Wh).
